# EUROPEAN PATENT SPECIFICATION

(11) **EP 2 572 122 B1**
(45) Date of publication and mention of the grant of the patent: **16.01.2019**
(21) Application number: 11783827.6
(22) Date of filing: 10.05.2011
(51) Int. Cl.: F16H 61/22, F16H 61/24, F16H 59/04, F16H 59/10, F16H 61/18

(54) **GEAR CHANGE CONTROL DEVICE FOR VEHICLE**
GANGSCHALTUNGS-STEUERGERÄT FÜR FAHRZEUGE
DISPOSITIF DE COMMANDE DE CHANGEMENT DE VITESSE POUR VÉHICULE

(30) Priority: 19.05.2010 SE 1050499
(43) Date of publication of application: 27.03.2013
(73) Proprietor: Scania CV AB, 151 87 Södertälje (SE)
(72) Inventor: LUNDIN, Michael, SE-121 33 Enskededalen (SE)
(74) Representative: Scania CV AB
(86) International application number: PCT/SE2011/050588
(87) International publication number: WO 2011/146000

(56) References cited:
- WO-A1-02/33290
- WO-A1-2009/156087
- DE-A1-102007 036 340
- DE-C1- 19 733 206
- JP-A- 2001 294 054
- US-A- 5 852 953
- US-A- 5 852 953
- US-A1- 2008 072 698
- US-A1- 2008 072 698

## Description

### TECHNICAL FIELD

The present invention relates generally to gear change control devices intended for vehicles. The invention relates particularly to a gear change control device with a manual gear lever which has no mechanical connection to the vehicle's gearbox and which therefore controls the transmission by means of electrical signals. The invention relates also to a gear change control device whereby the gear lever gives the driver mechanical feedback so that the gear change control device behaves like a manual gear change control device.

### STATE OF THE ART

Conventional manual gear change control devices involve the driver changing gear in the vehicle's transmission by means of a gear lever connected mechanically to one or more link rods which are connected to the gearbox and the transmission of the vehicle. However, it is becoming increasingly common for such mechanical gear change systems to be replaced by electric gear change systems whereby electrical signals control which gear is engaged. If the gear change movements are not transmitted directly via mechanical link rods but by electrical signals, the mechanical feedback to the driver is lost in that there is no mechanical sensation that a gear has actually been engaged. It thus becomes more difficult for the driver to know for example when to release the clutch in the vehicle. Most commonly these gear change control devices are therefore used in conjunction with automatic or semiautomatic gear change systems which have no clutch pedal.

An effect and disadvantage of such electric gear change systems is that they make it more difficult for the driver, without looking at the gear lever, to know which gear is being engaged. If it is desired to achieve a manual gear change system controlled via electrical signals with no physical mechanical contact between gearbox and gear lever in cases where it is desired that the gear lever should behave as in a manual gearbox, it is therefore necessary to provide mechanical feedback in the gear change control device. The primary purpose of such feedback is to provide the driver with tactile sensation as if the gear lever was actually in mechanical contact with the gearbox. The driver needs to "feel" that a gear has been engaged, so that he/she can know when it is possible to release the clutch pedal. A further problem pertains to the gearshift being moved in an incorrect direction and/or an incorrect gear position being engaged.

Certain gear change control device configurations use two relatively large and powerful actuators such as electromagnets, solenoids or the like in order inter alia to provide this feedback. Such a gear change control device will be expensive and also occupy a large amount of space, making it heavy, bulky and difficult to accommodate adjacent to, for example, a driving seat. Adopting pneumatic actuators also entails installing air pipes to the gear change control device from the gearbox. A solenoid valve is sometimes used to control the air supply to the actuator in the control device. Such solutions tend to make the gear change control device bulky, and a pneumatic solution also results in slower response in the gear change system. Pneumatic systems also usually cause disturbing noise which adversely affects driver comfort in the vehicle.

Attempts have previously been made to provide the driver with mechanical feedback in electric gear change systems.

Patent specification US20080072698, which discloses all the features of the preamble according to claim 1, refers for example to a gear change control device for an automatic gearbox which provides the driver with mechanical feedback and is also intended to prevent engagement of incorrect gear positions. This is achieved by means of hollows or guide grooves in a plate which prevent the driver from moving the gear change control device in an incorrect direction. However, this configuration will be relatively bulky and therefore difficult to accommodate in a vehicle with a high packing density.

Patent specification US5852953 refers to another solution for achieving a gear change control device which provides the driver with feedback during gear change operations. This gear change device is likewise primarily intended for a vehicle provided with an automatic gearbox and comprises a gear change lever which has its lower portion configured to follow a groove. The configuration reads the current position of the gearshift contactlessly, to minimise the number of components, and controls the vehicle's transmission by means of electrical signals, with no mechanical connection between gearbox and gear change device.

Patent specification DE19733206 refers to a gear change system with manual gear lever.

Patent specification DE102007036340 refers to an electrical shifting device for automatic gearbox in motor vehicle.

Patent specification JP2001294054 refers to a shift lever device capable of decreasing an installing space in a vehicular interior side.Known gear change systems which are based on the gearbox being controlled by electrical signals but nevertheless provide the driver with mechanical feedback are thus not configured in a way which is simple, involves effective use of space and is cost-effective to combine an electric gear change mechanism with the possibility of preventing engagement of certain gear positions or of making it impossible to engage certain gear positions unless predetermined conditions are fulfilled.

### SUMMARY OF THE INVENTION

An object of the invention is to solve the problem indicated above and propose for electric control of a vehicle's gearbox a gear change control device which is simple, cost-effective, compact, easily accommodated and of light weight and which can prevent/block engagement or disengagement of individual gear positions when certain predetermined conditions for the relevant gear position are not fulfilled.

A further object of the invention is to provide the driver with mechanical feedback on the current position of the gearshift.

A further object of the invention is that engagement or disengagement of individual gear positions should be preventable/blockable if the driver has not disengaged the clutch, if the engine speed is not correct etc.

A further object of the invention is that it should be possible for blocking and/or locking of certain gear positions to be by means of movable obstructions.

A further object of the invention is that it should be possible for all of the movable obstructions to be operated at the same time.

These and further objects and advantages are achieved according to the invention by a gear change device configured in accordance with the features indicated in the characterising part of claim 1.

The invention relates to a gear change system or gear change control device for a vehicle, comprising inter alia a bottom plate provided with recesses in the form of tracks or guide grooves. The gear change control device further comprises a spring-loaded gear lever, or gearshift, which has its lower portion running in the bottom plate's guide grooves. The guide grooves define the pattern according to which the gear lever or the gearshift is movable, and they also provide resistance which the driver feels in the gear lever when the gearshift is moved between different gear positions.

To make it possible to block certain gear positions or to lock the gearshift in a certain adopted gear position, the invention involves the provision of one or more vertical channels which lead into the bottom plate's various guide grooves at or near to the various possible gear positions, in which channels obstructions in the form of pins or pegs can be moved up or down. A plurality of pins may also be provided in, integrated with, a pin plate situated under the bottom plate of the gear change control device in such a way that the pin plate can move relative to the bottom plate, preferably in vertical directions, i.e. up towards or down away from the bottom plate. The pins are movable and can be moved up and down in the channels of the bottom plate. The pin plate is kept in an unlocked inactive state, e.g. by springs, and in a locked/blocked state by means of a locking device or locking mechanism arranged to move and firmly lock the pin plate in a locked state by abutment against the underside of the bottom plate so that the gearshift which runs in the guide grooves is blocked from being moved into or out of a gear position.

The locking mechanism thus locks the pin plate to the bottom plate, e.g. by means of an eccentric spindle or the like situated under the pin plate, while the springs only press the pin plate against the bottom plate, on its underside. The locking mechanism may be operated, e.g. be turned/rotated, via a small actuator which is controlled electrically by the control unit of the gearbox. The gearshift is thus blocked from being moved in the bottom plate's guide grooves into or out of a gear position when the pin plate and the pins are locked in their active upper position.

The primary advantages of the gear change control device according to the invention are that it is of simple, robust, compact and cost-effective construction with few movable parts. The gear change control device will thus be inexpensive, occupy little space, be of low weight and be easy to accommodate in the vehicle. Despite this, the gear change control device according to the invention can generate the two most important haptic functions for a manual gear lever, i.e. blocking or presenting resistance to movement of the gear lever if the system does not fulfil correct requirements for allowing engagement or disengagement of a gear position.

In the locked state of the pin plate, all the forces will be absorbed by the locking mechanism and not by the actuator.
The configuration with obstructive pins is usable for all gear positions and only one actuator is needed to block all of them.

Further features and advantages of the invention are indicated by the more detailed description of it set out below and the attached drawings and other claims.

### BRIEF LIST OF DRAWINGS

The invention is described in more detail below in the form of preferred embodiment examples with reference to the attached drawings.
**Figure 1** depicts in a view obliquely from above an electric gear change control device according to the invention, with one wall of the surrounding housing omitted.
**Figure 2** depicts in more detail the gear change control device according to Figure 1 with no surrounding walls, with an actuator associated with the bottom plate.
**Figure 3** depicts the gear change control device according to Figure 2 but in a view from the other side in which a locking means is visible.
**Figure 4** depicts an enlargement of, inter alia, the locking means in the form of a spindle with locking protrusions according to Figure 3.
**Figure 5** depicts part of the gear change control device as seen from one end, showing one of the springs which continuously press the pin plate against the bottom plate.
**Figure 6** depicts in a view from above the bottom plate of the gear change control device.
**Figure 7** depicts a section through part of the gear change control device according to an alternative embodiment.
**Figure 8** depicts in a view obliquely from above the pin plate only.
**Figure 9** depicts the pin plate as seen from one end.
**Figure 10** depicts the pin plate as seen from the side.
**Figures 11a****-c** depict alternative embodiments of the spindle of the locking mechanism.

### DESCRIPTION OF PREFERRED EMBODIMENTS

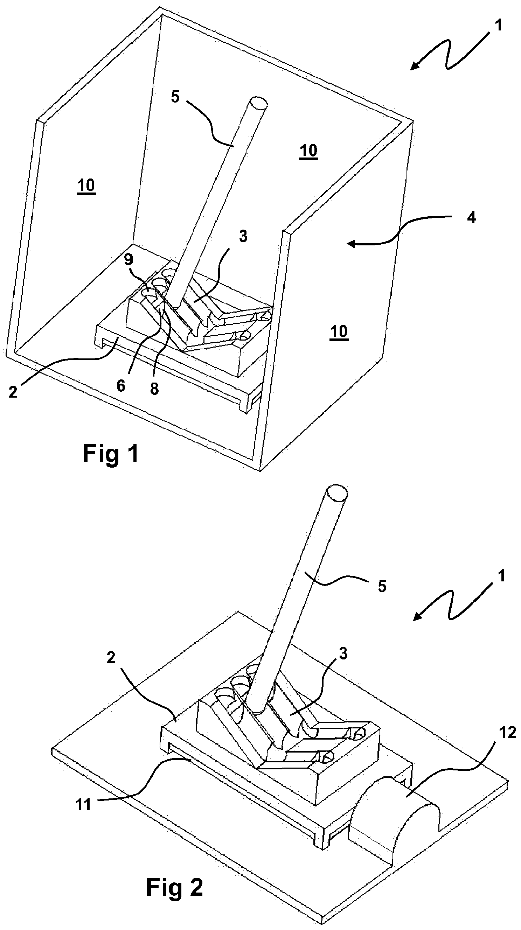

**Figure 1** depicts the invention, which relates to a gear change system or gear change control device 1, for electrical control of the transmission in a vehicle, comprising inter alia a bottom plate 2 provided with recesses in the form of tracks or guide grooves 3 and disposed in a housing 4. The gear change control device 1 comprises also a spring-loaded gear lever or gearshift 5 which runs in the bottom plate's guide grooves 3, and pins 6 which are adapted to being movable, raisable and lowerable, in recesses or channels 8 which are provided in the bottom plate 2 and which lead out into the guide grooves 3 at or near to the various possible gear positions 9 of the gear change control device 1.

The diagram shows the gear change control device 1 with one of its wall portions 10 omitted. A spring-loaded lower portion (not described in more detail) of the gear lever or gearshift 5 of the gear change control device runs in the tracks or guide grooves 3 provided in the bottom plate 2 situated in the lower portion of housing 4. The guide grooves 3 define a pattern according to which the gearshift 5 can be moved, and also provide resistance which the driver feels when the gear lever/ gearshift 5 is moved between different gear positions 9.

**Figure 2** depicts in more detail a gear change control device 1 according to the invention as in Figure 1 but with no surrounding wall portions. A pin plate 11 movable in height directions is provided under the bottom plate 2. The movements of the pin plate 11 are controlled by an actuator 12 situated at one end of the bottom plate 2. The actuator 12 may take the form of an electromagnet/solenoid, a stepping motor, an electric motor, a pneumatic unit or the like (not depicted).

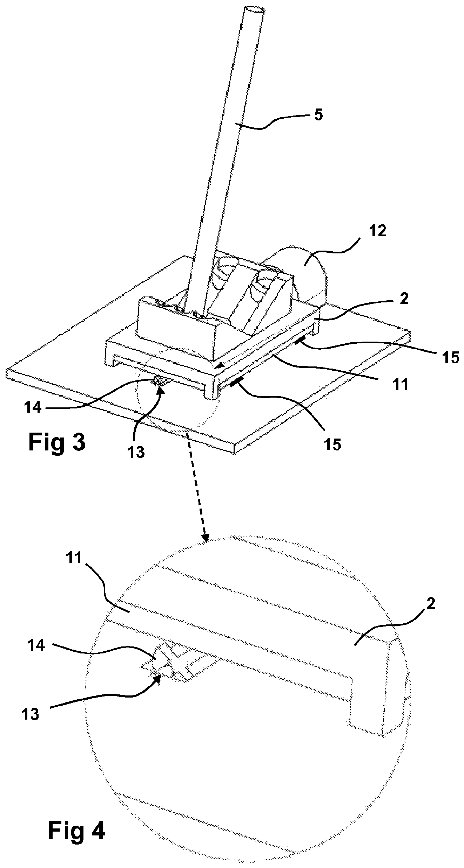

**Figure 3** depicts the gear change control device 1 as in Figure 2 but from a different direction, showing a locking means 13. The locking means 13 here takes the form of a spindle with protrusions 14 and can lock/block the pin plate 11 in an upper position when the spindle is turned so that part of it presses against the pin plate 11. The pin plate 11 is thus locked against the underside of the bottom plate 2 and is blocked in that position. When the pin plate 11 is not locked, i.e. when the locking means 13 is turned to a position in which the spindle's protrusions 14 are no longer directed towards the bottom plate 2, the pin plate 11 can move in a vertical direction and be pressed downwards by the gearshift 5 against the action of one or more springs 15.

**Figure 4** depicts the locking means 13 in more detail, as seen from one end of the bottom plate 2. It illustrates more clearly that the locking means 13 is provided with semicircular protrusions 14. The protrusions 14 do not extend all the way round the locking means 13. The result is that the pin plate 11 is movable when the side of the locking means 13 which has no protrusions 14 is facing towards the pin plate 11.

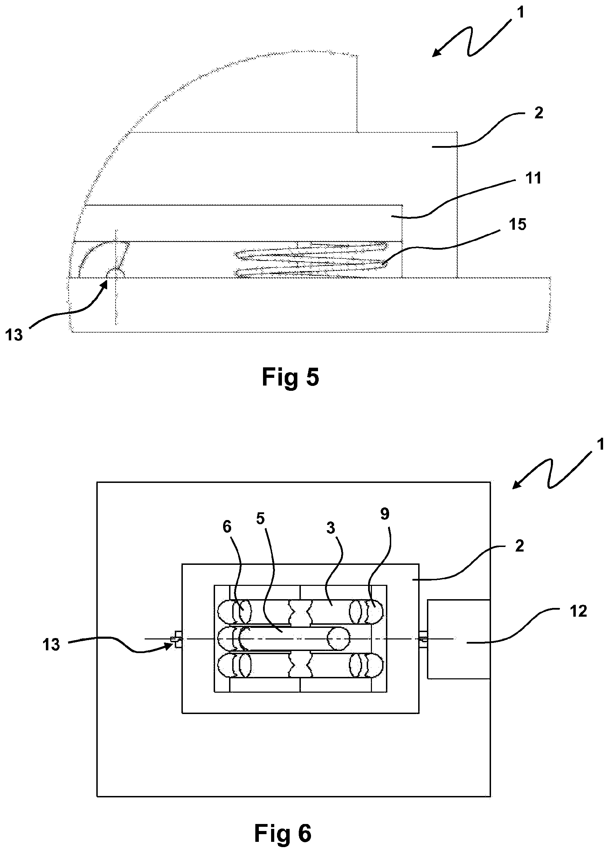

**Figure 5** depicts part of the gear change control device 1 in plan view directly from one end, showing one of the, for example, four springs 15 which continuously endeavour to press or push the pin plate 11 against the underside of the bottom plate 2. The locking means 13 is here turned so that its protrusions 14 lock/block the pin plate 11 in the position in which it is brought together with the bottom plate 2.

**Figure 6** depicts in a view from above the bottom plate 2 of the gear change control device 1. It shows part of the gearshift 5 and also the guide grooves 3 of the bottom plate 2, the locking means 13, the upper end portions of the pins 6, and the actuator 12 for turning the locking means 13.

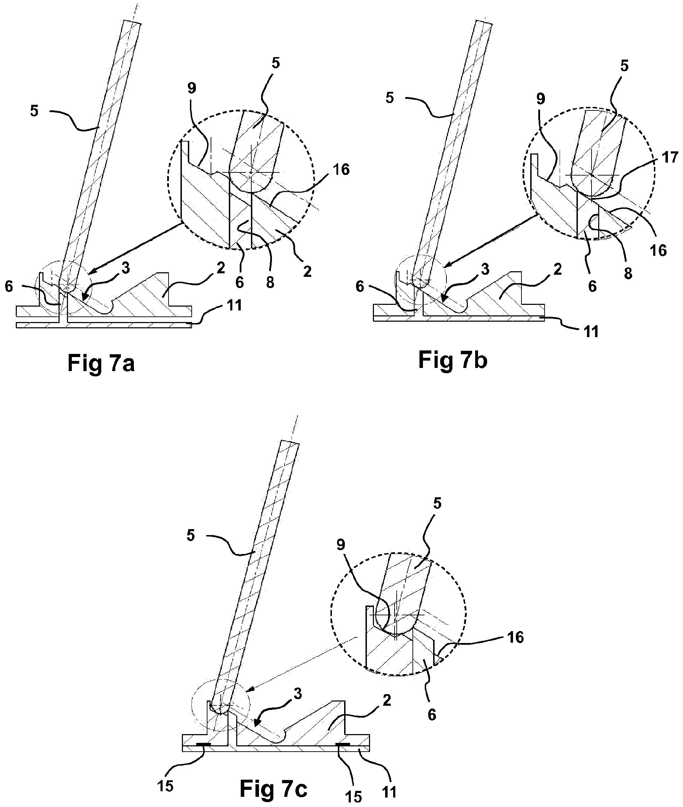

**Figure 7** depicts from the side a section through the gear change control device 1. The channels 8 extend from the lower surface to the upper portion of the bottom plate 2 and preferably lead out in the bottom surface 16 of one or more of the various guide grooves 3 of the bottom plate 2, preferably in the vicinity of respective gear positions 9. The pins 6 protrude above the bottom surface 16 of the guide grooves 3 and are therefore able to lock/block the gearshift 5 in a certain gear position 9. To this end, the actuator 12 (not depicted) is adapted to pushing the pin plate 11 up towards the bottom plate 2 and locking/blocking it in that position.

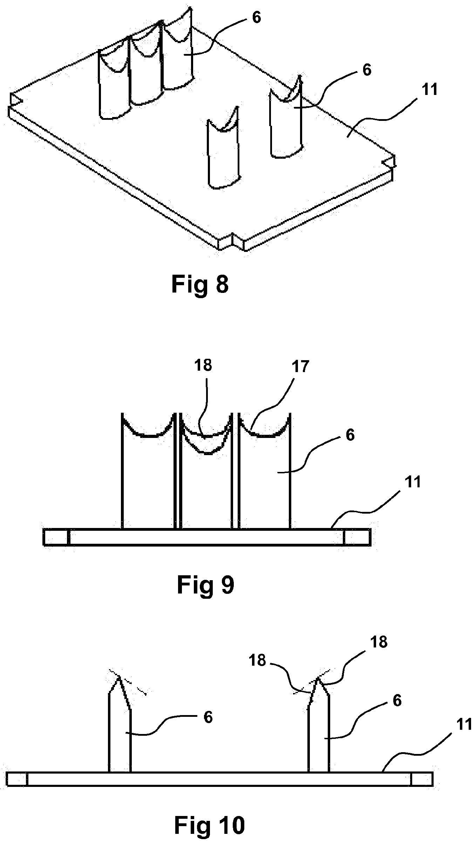

**Figure 8** depicts in a view obliquely from above the pin plate 11 only. The pin plate may with advantage be made of metal or some other tolerant material suitable for the purpose, e.g. a plastic such as POM. Five pins 6 protrude in this case substantially perpendicularly from the pin plate 11 and preferably point upwards, in such a way that in a fitted state they can run movably in channels 8 in the bottom plate 2 (not depicted).

**Figure 9** depicts the pin plate 11 from one end, showing three out of the five different pins 6 of the pin plate 11. Each pin 6 is provided at the top end with a concave hollow 17 and with chamfered edges 18 to make it easier for the gearshift 5 to push the pins 6 down and move past.

**Figure 10** is a side view of the pin plate 11 showing more clearly the chamfered upper edges 18 of the pins 6 in the direction in which the gearshift 5 can be moved. The upper end portions of the pins 6 may also be gently rounded (not depicted) to make it possible for the gearshift 5 to push down and pass the pins 6 in their unlocked state.

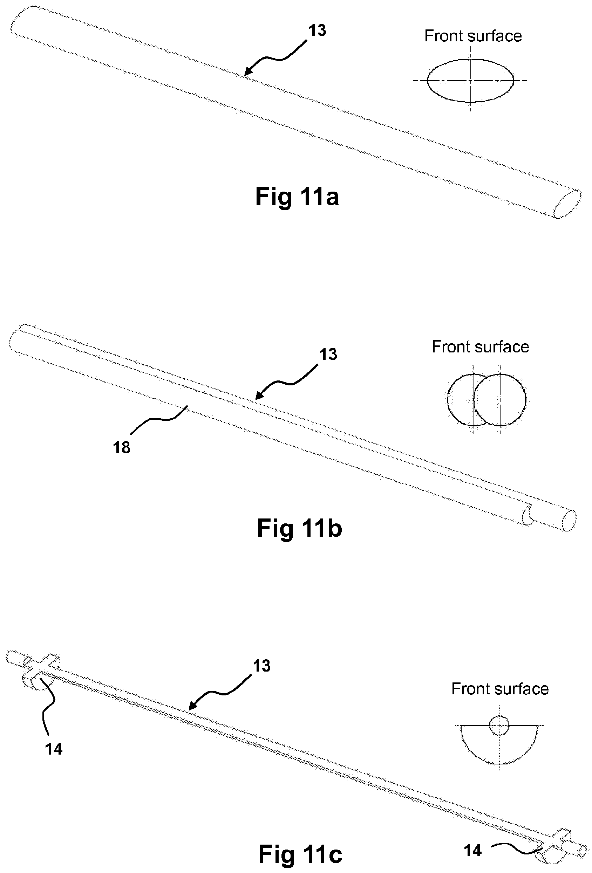

**Figures 11a****-c** depict alternative embodiments of the spindle in the locking means 13. The various embodiments are depicted partly in oblique side view and partly from one end, in the form of a front surface. The locking means 13 may therefore be of elliptical shape in cross-section (Figure 11a) or be configured with an eccentric portion 18 (Figure 11b) or be provided with protrusions 14 of half-moon or semicircular shape (Figure 11c) or be provided with protrusions of some other shape and be accommodated in some other way (not depicted).

The above description is primary intended to facilitate comprehension of the invention. Accordingly, the invention is of course not confined merely to the embodiments indicated, since other variants of it are also possible and conceivable within the protective scope of the claims set out below. Thus it is possible that one and the same pin plate may both block the gearshift in a certain gear position and allow the gearshift to reach a certain gear position or prevent the gearshift from reaching a certain gear position. In such cases the pin plate may be put into more than two different height positions and the locking mechanism might lock the pin plate in any of various different height positions. The invention may also be supplemented by a further actuator to provide vibrations in the gear lever with the object of increasing the tactile sensation in certain situations.

## Claims

1. A gear change control device (1) for a gearbox of a vehicle, comprising a spring-loaded gearshift (5) also defined as a spring-loaded gear lever, which runs in guide grooves (3) which are provided in a bottom plate (2) and which define the gear change pattern and gear change resistance of the gearshift (5) when the driver moves the gear lever between different gear positions (9),
***characterised***
- **in that** at least one pin (6) is integrated with a pin plate (11) and is arranged to be movable in a channel (8) in the bottom plate (2) for blocking certain gear positions or for locking the gear lever (5) in a certain gear position (9),
- that the pin plate (11) can be kept in at least two different positions, an unlocked state and a locked state,
- that the pin plate (11) in the locked state is adapted to preventing disengagement of the gear lever (5) from a certain gear position (9),
- that the pin plate (11) in the unlocked state allows disengagement of the gear lever (5) from a certain gear position (9).

2. A gear change control device (1) according to claim 1, ***characterised***
- **in that** a plurality of pins (6) are integrated with the pin plate (11) and are arranged to be movable in a plurality of channels (8) in the bottom plate (2).

3. A gear change control device (1) according to claim 1 or 2,
***characterised***
- **in that** the pin plate (11) is arranged to be movable relative to the bottom plate (2).

4. A gear change control device (1) according to any one of the foregoing claims,
***characterised***
- **in that** the pin plate (11) is situated below the bottom plate (2).

5. A gear change control device (1) according to any one of the foregoing claims,
***characterised***
- that the pin plate (11) is arranged to be movable in vertical directions relative to the bottom plate (2).

6. A gear change control device (1) according to any one of the foregoing claims,
***characterised***
- **in that** the pin plate (11) in the unlocked state is adapted to being pressed against the bottom plate (2) by one or more springs (15).

7. A gear change control device (1) according to any one of the foregoing claims,
***characterised***
- **in that** a locking means (13) is provided to lock the pin plate (11) against the bottom plate (2) in the locked state.

8. A gear change control device (1) according to claim 7, ***characterised***
- **in that** the locking means (13) takes the form of a spindle with elliptical cross-section.

9. A gear change control device (1) according to claim 7, ***characterised***
- **in that** the locking means (13) takes the form of a spindle with an eccentric portion (18).

10. A gear change control device (1) according to claim 7, ***characterised***
- **in that** the locking means (13) takes the form of a spindle provided with at least one semicircular protrusion (14).

11. A gear change control device (1) according to any one of claims 7-10,
***characterised***
- **in that** an actuator (12) is provided to guide the locking means (13) between the locked state and the unlocked state.

12. A gear change control device (1) according to claim 11, ***characterised***
- **in that** the actuator (12) takes the form of an electromagnet/solenoid.

13. A gear change control device (1) according to claim 11 ***characterised***
- **in that** the actuator (12) takes the form of a stepping motor.

14. A gear change control device (1) according to claim 11, ***characterised***
- **in that** the actuator (12) takes the form of an electric motor.

15. A gear change control device (1) according to any one of claims 11-14,
***characterised***
- **in that** the actuator (12) is adapted to being controlled via a control unit of the gearbox.

16. A vehicle, particularly a truck, provided with a gear change control device according to any one of claims 1-15.

## Patentansprüche

1. Gangschaltungs-Steuereinrichtung (1) für ein Getriebe eines Fahrzeugs, aufweisend
einen federbelasteten Schalthebel (5), der auch als ein federbelasteter Ganghebel definiert ist, der in Führungsnuten (3) in einer Bodenplatte (2) bewegt wird, die das Gangschaltungsmuster und den Gangschaltungswiderstand des Schalthebels (5) definieren, wenn der Fahrer den Schalthebel zwischen verschiedenen Schaltpositionen (9) bewegt,
**dadurch gekennzeichnet, dass**
- mindestens ein Stift (6) mit einer Stiftplatte (11) integriert und so angeordnet ist, dass er in einer Bahn (8) in der Bodenplatte (2) beweglich ist, um bestimmte Schaltpositionen zu blockieren oder um den Schalthebel (5) in einer bestimmten Schaltposition (9) zu arretieren,
- dass die Stiftplatte (11) in mindestens zwei verschiedenen Positionen gehalten werden kann, in einem freigegebenen Zustand und in einem arretierten Zustand,
- dass die Stiftplatte (11) im arretierten Zustand eingerichtet ist, zu verhindern, dass der Schalthebel (5) aus einer bestimmten Schaltposition (9) außer Eingriff kommt,
- dass die Stiftplatte (11) im freigegebenen Zustand ermöglicht, dass der Schalthebel (5) aus einer bestimmten Schaltposition (9) außer Eingriff kommt.

2. Gangschaltungs-Steuereinrichtung (1) nach Anspruch 1, **dadurch gekennzeichnet, dass**
- eine Mehrzahl Stifte (6) mit der Stiftplatte (11) integral ausgebildet und so angeordnet sind, dass sie in einer Mehrzahl Bahnen (8) in der Bodenplatte (2) bewegt werden können.

3. Gangschaltungs-Steuereinrichtung (1) nach Anspruch 1 oder 2, **dadurch gekennzeichnet, dass**
- die Stiftplatte (11) relativ zur Bodenplatte (2) beweglich angeordnet ist.

4. Gangschaltungs-Steuereinrichtung (1) nach einem der vorigen Ansprüche, **dadurch gekennzeichnet, dass**
- die Stiftplatte (11) unter der Bodenplatte (2) angeordnet ist.

5. Gangschaltungs-Steuereinrichtung (1) nach einem der vorigen Ansprüche, **dadurch gekennzeichnet, dass**
- die Stiftplatte (11) so angeordnet ist, dass sie in senkrechter Richtung relativ zur Bodenplatte (2) beweglich ist.

6. Gangschaltungs-Steuereinrichtung (1) nach einem der vorigen Ansprüche, **dadurch gekennzeichnet, dass**
- die Stiftplatte (11) im freigegebenen Zustand dazu eingerichtet ist, durch eine oder mehrere Federn (15) gegen die Bodenplatte (2) gepresst zu werden.

7. Gangschaltungs-Steuereinrichtung (1) nach einem der vorigen Ansprüche, **dadurch gekennzeichnet, dass**
- ein Arretiermittel (13) bereitgestellt ist, um die Stiftplatte (11) im arretierten Zustand an der Bodenplatte (2 zu arretieren.

8. Gangschaltungs-Steuereinrichtung (1) nach Anspruch 7, **dadurch gekennzeichnet, dass**
- das Arretiermittel (13) die Form einer Spindel mit elliptischem Querschnitt annimmt.

9. Gangschaltungs-Steuereinrichtung (1) nach Anspruch 7, **dadurch gekennzeichnet, dass**
- das Arretiermittel (13) die Form einer Spindel mit einem exzentrischen Abschnitt (18) annimmt.

10. Gangschaltungs-Steuereinrichtung (1) nach Anspruch 7, **dadurch gekennzeichnet, dass**
- das Arretiermittel (13) die Form einer Spindel annimmt, die mit mindestens einem halbkreisförmigen Vorsprung (14) versehen ist.

11. Gangschaltungs-Steuereinrichtung (1) nach einem der Ansprüche 7 bis 10, **dadurch gekennzeichnet, dass**
- ein Aktor (12) zur Führung des Arretiermittels (13) zwischen dem arretierten Zustand und dem freigegebenen Zustand bereitgestellt ist.

12. Gangschaltungs-Steuereinrichtung (1) nach Anspruch 11, **dadurch gekennzeichnet, dass**
- der Aktor (12) die Form eines Elektromagneten/Solenoids annimmt.

13. Gangschaltungs-Steuereinrichtung (1) nach Anspruch 11, **dadurch gekennzeichnet, dass**
- der Aktor (12) die Form eines Schrittmotors annimmt.

14. Gangschaltungs-Steuereinrichtung (1) nach Anspruch 11, **dadurch gekennzeichnet, dass**
- der Aktor (12) die Form eines Elektromotors annimmt.

15. Gangschaltungs-Steuereinrichtung (1) nach einem der Ansprüche 11 bis 14, **dadurch gekennzeichnet, dass**
- der Aktor (12) dazu eingerichtet ist, über die Steuerungseinheit des Getriebes gesteuert zu werden.

16. Fahrzeug, insbesondere ein Lastkraftwagen, das mit einer Gangschaltungs-Steuereinrichtung nach einem der Ansprüche 1 bis 15 ausgerüstet ist.

## Revendications

1. Dispositif de commande de changement de vitesse (1) pour une boîte de vitesses de véhicule, comprenant une commande de changement de vitesse à ressort (5) également définie comme levier de vitesse à ressort qui se déplace dans des rainures de guidage (3) prévues dans une plaque inférieure (2) et qui définissent le schéma de changement de vitesse et la résistance du levier de vitesse au changement de vitesse (5) lorsque le conducteur déplace le levier de vitesse entre les différentes positions de vitesse (9),
***caractérisé***
- **en ce qu'**au moins un axe (6) est intégré à une plaque d'axes (11) et est disposé de manière à pouvoir être déplacé dans un canal (8) dans la plaque inférieure (2) pour verrouiller certaines positions de vitesse ou verrouiller le levier de vitesse (5) dans une certaine position de vitesse (9),
- **en ce que** la plaque d'axes (11) peut être maintenue dans au moins deux positions différentes, un état déverrouillé et un état verrouillé,
- **en ce que** la plaque d'axes (11) dans l'état verrouillé est conçue pour empêcher le débrayage du levier de vitesses (5) à partir d'une certaine position de vitesse (9),
- **en ce que** la plaque d'axes (11) dans l'état déverrouillé permet le débrayage du levier de vitesse (5) à partir d'une certaine position de vitesse (9).

2. Un dispositif de commande de changement de vitesse (1) selon la revendication 1,
***caractérisé***
- **en ce que** plusieurs axes (6) sont intégrés à la plaque d'axes (11) et sont disposés de manière à pouvoir être déplacés dans plusieurs canaux (8) dans la plaque inférieure (2).

3. Dispositif de commande de changement de vitesse (1) selon la revendication 1 ou 2,
***caractérisé***
- **en ce que** la plaque d'axes (11) est disposée de manière à pouvoir être déplacée par rapport à la plaque inférieure (2).

4. Dispositif de commande de changement de vitesse (1) selon l'une quelconque des revendications qui précèdent,
***caractérisé***
- **en ce que** la plaque d'axes (11) est placée en dessous de la plaque inférieure (2).

5. Dispositif de commande de changement de vitesse (1) selon l'une quelconque des revendications qui précèdent,
***caractérisé***
- **en ce que** la plaque d'axes (11) est disposée de manière à pouvoir être déplacée dans des directions verticales par rapport à la plaque inférieure (2).

6. Dispositif de commande de changement de vitesse (1) selon l'une quelconque des revendications qui précèdent,
***caractérisé***
- **en ce que** la plaque d'axes (11) dans l'état déverrouillé est conçue pour être pressée contre la plaque inférieure (2) par au moins un ressort (15).

7. Dispositif de commande de changement de vitesse (1) selon l'une quelconque des revendications qui précèdent,
***caractérisé***
- **en ce qu'**un moyen de verrouillage (13) est prévu pour verrouiller la plaque d'axes (11) contre la plaque inférieure (2) dans l'état verrouillé.

8. Dispositif de commande de changement de vitesse (1) selon la revendication 7,
***caractérisé***
- **en ce que** le moyen de verrouillage (13) se présente sous la forme d'une tige de section transversale elliptique.

9. Dispositif de commande de changement de vitesse (1) selon la revendication 7,
***caractérisé***
- **en ce que** le moyen de verrouillage (13) se présente sous la forme d'une tige comportant une partie excentrique (18).

10. Dispositif de commande de changement de vitesse (1) selon la revendication 7,
***caractérisé***
- **en ce que** le moyen de verrouillage (13) se présente sous la forme d'une tige comprenant au moins une saillie semi-circulaire (14).

11. Dispositif de commande de changement de vitesse (1) selon l'une quelconque des revendications de 7 à 10,
***caractérisé***
- **en ce qu'**un actionneur (12) est prévu pour guider le moyen de verrouillage (13) entre l'état verrouillé et l'état déverrouillé.

12. Dispositif de commande de changement de vitesse (1) selon la revendication 11,
***caractérisé***
- **en ce que** l'actionneur (12) se présente sous la forme d'un électro-aimant/solénoïde.

13. Dispositif de commande de changement de vitesse (1) selon la revendication 11
***caractérisé***
- **en ce que** l'actionneur (12) se présente sous la forme d'un moteur pas à pas.

14. Dispositif de commande de changement de vitesse (1) selon la revendication 11,
***caractérisé***
- **en ce que** l'actionneur (12) se présente sous la forme d'un moteur électrique.

15. Dispositif de commande de changement de vitesse (1) selon l'une quelconque des revendications 11 à 14,
***caractérisé***
- **en ce que** l'actionneur (12) est conçu pour être commandé par le biais d'une unité de commande de la boîte de vitesses.

16. Véhicule, notamment camion, équipé d'un dispositif de commande de changement de vitesse selon l'une quelconque des revendications 1 à 15.
